Europäisches Patentamt

European Patent Office

Office européen des brevets

(19)

(11) EP 1 061 664 B1

(12) EUROPÄISCHE PATENTSCHRIFT

(45) Veröffentlichungstag und Bekanntmachung des Hinweises auf die Patenterteilung:
28.01.2004  Patentblatt 2004/05

(51) Int Cl.7: H04B 1/707

(21) Anmeldenummer: 99121904.9

(22) Anmeldetag: 05.11.1999

(54) **Rückgewinnung von gespreizten Daten aus einem Signalgemisch im Frequenzbereich**

Recovering of spread data from a composite signal in the frequency domain

Récupération de données étalé d'un signal composite dans le domaine fréquentiel

(84) Benannte Vertragsstaaten:
DE FR GB IT

(30) Priorität: 14.06.1999  EP 99111517

(43) Veröffentlichungstag der Anmeldung:
20.12.2000   Patentblatt 2000/51

(73) Patentinhaber: SIEMENS
AKTIENGESELLSCHAFT
80333 München (DE)

(72) Erfinder:
• Goetze, Juergen, Prof.Dr.
44229 Dortmund (DE)
• Haardt, Martin, Dr.
81477 Muenchen (DE)
• Vollmer, Marius
44139 Dortmund (DE)

(56) Entgegenhaltungen:
WO-A-00/77942

• INKYU LEE ET AL: "A FAST COMPUTATION ALGORITHM FOR THE DECISION FEEDBACK EQUALIZER" IEEE TRANSACTIONS ON COMMUNICATIONS, IEEE INC. NEW YORK, US, Bd. 43, Nr. 11, 1. November 1995 (1995-11-01), Seiten 2742-2749, XP000536298 ISSN: 0090-6778

• JUNG P ET AL: "A GENERALIZED VIEW ON MULTICARRIER CDMA MOBILE RADIO SYSTEMS WITH JOINT DETECTION (PART II). EINE VERALLGEMEINERTE DARSTELLUNG VON MOBILFUNKKONZEPTEN MIT MULTITRAEGER-CDMA UND GEMEINSAMER DETEKTION (TEIL II)" FREQUENZ, SCHIELE UND SCHON GMBH. BERLIN, DE, Bd. 51, Nr. 11/12, 1. November 1997 (1997-11-01), Seiten 270-275, XP000765910 ISSN: 0016-1136

• STEINER B ET AL: "OPTIMUM AND SUBOPTIMUM CHANNEL ESTIMATION FOR THE UPLINK OF CDMA MOBILE RADIO SYSTEMS WITH JOINT DETECTION" EUROPEAN TRANSACTIONS ON TELECOMMUNICATIONS AND RELATED TECHNOLOGIES, AEI, MILANO, IT, Bd. 5, Nr. 1, 1994, Seiten 39-50, XP000445714 ISSN: 1120-3862

• JUNG P ET AL: "A GENERALIZED VIEW ON MULTICARRIER CDMA MOBILE RADIO SYSTEMS WITH JOINT DETECTION (PART I)" FREQUENZ, SCHIELE UND SCHON GMBH. BERLIN, DE, Bd. 51, Nr. 7/8, 1. Juli 1997 (1997-07-01), Seiten 174-185, XP000735799 ISSN: 0016-1136

• PIGEONNAT Y: "JOINT DETECTION FOR UMTS: COMPLEXITY AND ALTERNATIVE SOLUTIONS" 1999 IEEE 49TH. VEHICULAR TECHNOLOGY CONFERENCE. HOUSTON, TX, MAY 16 - 20, 1999, IEEE VEHICULAR TECHNOLOGY CONFERENCE, NEW YORK, NY: IEEE, US, Bd. 1 CONF. 49, 16. Mai 1999 (1999-05-16), Seiten 546-550, XP000899291 ISBN: 0-7803-5566-0

**Beschreibung**

Die Erfindung betrifft ein Verfahren zur empfangsseitigen Schätzung von Daten aus einem Empfangssignal.

Von einem oder mehreren Sendern eines Kommunikationssystems werden Daten unterschiedlicher Verbindungen, die zur empfangsseitigen Separierung mit einem verbindungsindividuellen Spreizkode gespreizt sind, gesendet. Empfänger des Kommunikationssystems schätzen aus einem Empfangssignal.

Aus DE 198 10 285 A1 ist ein Funk-Kommunikationssystem bekannt, bei dem zur Unterscheidung der Signalquellen und damit zur Auswertung der Signale als Frequenzmultiplex (FDMA), Zeitlagenmultiplex (TDMA) oder Codemultiplex (CDMA) bekannte Verfahren dienen, die auch miteinander kombiniert werden können.

Eine empfangsseitige Separierung eines Signalgemisches läßt sich zudem mit Hilfe einer sogenannten gemeinsamen Schätzung (JD, Joint Detection) durchführen, die beispielsweise in DE 41 21 356 C2 und DE 43 29 320 A1 beschrieben ist.

Aus WO 00 77942 A (Sostrato Giovanna; Benvenuto Nevio (IT); Telit Mobile Terminals S) 21. Dezember 2000 (2000-12-21) ist ein Verfahren zur Multiuserdetection im TDCDMA-System bekannt, bei dem eine Transformation des empfangenen Vektors mittels Fast Fourier Transformationen erfolgt, bei dem das Resultat mit einer strukturierten Matrix multipliziert wird und eine Rücktransformation dieses Resultats mit weiteren Fast Fourier Transformationen erfolgt. Die strukturierte Matrix wird wiederum durch Fast Fourier Transformationen aus einer nicht diagonalen Systemmatrix gewonnen.

Aus Inkyu Lee et al: "A Fast Computation Algorithm for the Decision Feedback Equalizer" IEEE Transactions on Communications, IEEE Inc. New York, US, Bd. 43, Nr. 11, 1. November 1995 (1995-11-01), Seiten 2742-2749, XP000536298 ISSN: 0090-6778, ist ein Algorithmus für einen rückgekoppelten Entzerrer bekannt.

Aus Steiner B et al: "Optimum and Suboptimum Channel Estimation for the Uplink of CDMA Mobile Radio Systems with Joint Detection" European Transactions on Telecommunications and Related Technologies, AEI, Milano, IT, Bd. 5, Nr. 1, 1994, Seiten 39-50, XP000445714 ISSN: 1120-3862, ist ein Verfahren zur Kanalschätzung bekannt, bei dem mit diskreter Fouriertransformation für ein Benutzersystem gearbeitet wird.

Aus Pigeonnat Y: "Joint Detection for UMTS; Complexity and Alternative Solutions" 1999 IEEE 49th. Vehicular Technology Conference. Houston, TX, May 16-20, 1999, IEEE Vehicular Technology Conference, New York, NY: IEEE, US, Bd. 1 CONF. 49, 16. Mai 1999 (1999-05-16), Seiten 546-550, XP000899291 ISBN: 0-7803-5566-0, sind verschiedene Näherungsverfahren bekannt, die zur Joint Detection in TD/CDMA-Systemen eingesetzt werden können. Eine Näherungslösung basiert auf der Konvergenz der Cholesky Zerlegung, die in einem Zero Forcing Block Linear Equalizer (ZF-BLE) durchgeführt wird. Alternativ wird vorgeschlagen, die Blockbehandlung durch eine Filterbehandlung zu ersetzen. Diese Schätzungen erfordern einen sehr hohen Rechenaufwand.

Der Erfindung liegt die Aufgabe zu Grunde, ein weniger rechenintensives Verfahren zur Rückgewinnung von gespreizten Daten aus einem Empfangssignal anzugeben.

Diese Aufgabe wird durch das Verfahren mit den Merkmalen des Patentanspruchs 1 gelöst. Vorteilhafte Weiterbildungen der Erfindung sind den Unteransprüchen zu entnehmen.

Das erfindungsgemäße Verfahren dient zur empfangsseitigen Schätzung von gesendeten Daten aus einem Empfangssignal. Das Empfangssignal setzt sich u.a. aus übertragenen Symbolen der Daten, aus Interzell-Interferenzen sowie aus dem Rauschen des Übertragungskanals sowie der Eingangsstufe des Empfängers zusammen. Das Empfangssignal wird beispielsweise verstärkt, gefiltert und Analog-Digital gewandelt. Die gesendeten Daten können von einem oder mehreren Sendern stammen.

Die zu sendenden Daten der unterschiedlichen Verbindungen werden mit mindestens einem verbindungsindividuellen Spreizkode gespreizt. Die Übertragung in unterschiedlichen Verbindungen schließt auch die Möglichkeit ein, Daten von einem Sender über mehrere Spreizkodes zu übertragen, um so die Übertragungsrate zu erhöhen. Die Daten liegen beispielsweise als binäre Daten zur Spreizung vor und werden je nach Spreizkode mit einer Chipfolge gespreizt.

Die gespreizten Daten werden gemeinsam übertragen und die gesendeten Daten empfangsseitig im Frequenzbereich geschätzt. Ein Grund für die empfangsseitige Schätzung der gemeinsam übertragenen Daten sind beispielsweise Verzerrungen im Übertragungskanal. Durch die Schätzung werden die Daten der unterschiedlichen Verbindungen unter Einbeziehung der empfangsseitig bekannten Spreizkodes separiert. Die Schätzung der gesendeten Daten aus dem Empfangssignal wird vorteilhaft im Frequenzbereich beispielsweise durch eine entsprechende Software in einem digitalen Signalprozessor durchgeführt.

Die Schätzung im Frequenzbereich reduziert den Rechenaufwand zur Durchführung der Schätzung merklich. Beispielsweise erfordert die zur herkömmlichen Schätzung benutzte Entzerrung im Zeitbereich wesentlich mehr Rechenoperationen als die ensprechende Division im Frequenzbereich, so daß rechentechnische Ressourcen eingespart werden.

Das erfindungsgemäße Verfahren wird beispielsweise für eine Funk-Übertragung für ein terrestisches Funk-Kommunikationssystem bzw. für eine Satelliten-Übertragung eingesetzt. Alternativ wird das erfindungsgemäße Verfahren für eine Übertragung in kabelgebundenen Systemen oder Lichtwellenleitern angewandt.

In einer Ausgestaltung des erfindungsgemäßen Verfahrens werden mit zueinander orthogonalen Chipfolgen Interferenzen reduziert.

In einer vorteilhaften Weiterbildung der Erfindung werden die Daten der unterschiedlichen Verbindungen gemeinsam geschätzt. Erst die Kombination aus der Schätzung im Frequenzbereich und der gemeinsamen Schätzung der gesendeten Daten resultiert in der bedeutenden Vereinfachung der Rechenoperationen. Zwar ist die gemeinsame Schätzung an sich, beispielsweise als JD-CDMA (Joint Detection Code Division Multiple Access), bekannt, doch erst die gemeinsame Schätzung im Frequenzbereich, die keine aufwendige Lösung von großen Gleichungssystemen im Zeitbereich benötigt, ermöglicht eine Nutzung des JD-CDMA Systems mit einem günstigen Aufwand/Nutzen Verhältnis. In einer alternativen Weiterbildung wird das erfindungsgemäße Verfahren für W-CDMA (Wideband CDMA) oder TD-CDMA (Time Division CDMA) Systeme angewendet.

In einer weiteren vorteilhaften Weiterbildung werden Folgen von Symbolen der Daten mit einer Überlappungsmethode geschätzt. Eine Folge besteht beispielsweise aus 16 Symbolen. Für ein TD-CDMA System ist eine Folge von Symbolen beispielsweise alle Symbole eines Zeitschlitzes. In einer vorteilhaften Weiterbildung der Erfindung wird die Anzahl der Symbole einer Folge durch eine Einrichtung des Kommunikationssystems konfiguriert. In einer Ausgestaltung dieser Weiterbildung wird die Anzahl der Symbole je Folge auf Zweier-Potenz-Schritte begrenzt. Die Überlappungsmethode sieht vor, daß die geschätzten Folgen von Symbolen einander überlappen. Die Symbole werden entsprechend mehrfach geschätzt.

In einer vorteilhaften Weiterbildung der Erfindung wird mindestens ein Symbol am Anfang einer Folge oder ein Symbol am Ende einer Folge verworfen. Durch die Schätzung einer endlichen Folge von Symbolen können Fehler am Anfang oder Ende einer Folge auftreten und möglicherweise die Fehlerwahrscheinlichkeit der Symbole erhöhen. Die verworfenen Symbole gehen jedoch nicht verloren, da durch die Verwendung der Überlappungsmethode die Symbole mehrfach geschätzt werden. Vorteilhafterweise liegen die geschätzten Symbole für zumindest eine Schätzung in der Mitte der Folge.

In einer Weiterbildung der Erfindung werden empfangsseitig Übertragungskanäle der Verbindungen im Zeitbereich modelliert. Zum Beispiel werden im Frequenzbereich bestimmte Übertragungsfunktionen in den Zeitbereich (Kanalimpulsantwort) transformiert und mit den empfangsseitig bekannten Spreizkodes kombiniert. In diesem Beispiel wird anschließend unter Verwendung des Ergebnisses ein Gleichungssystem, beispielsweise unter Verwendung von Matrizen, aufgestellt, um die Übertragungskanäle im Zeitbereich zu modellieren. Die Modellierung der Übertragungskanäle und das Empfangssignal werden in den Frequenzbereich transformiert.

In einer alternativen Weiterbildung der Erfindung werden empfangsseitig Übertragungskanäle der Verbindungen im Frequenzbereich modelliert, so daß die Übertragungsfunktionen nicht in den Zeitbereich transformiert werden müssen. Das Empfangssignal wird in den Frequenzbereich transformiert. In einer Ausgestaltung der Weiterbildung werden die Kanalimpulsantworten zur Schätzung im Frequenzbereich mit den Spreizkodes kombiniert und zur Anpassung an das transformierte Empfangssignal konvertiert.

Im Folgenden wird die Erfindung anhand von Ausführungsbeispielen bezugnehmend auf zeichnerische Darstellungen näher erläutert.

Dabei zeigen

FIG 1 die Burst-Struktur eines Zeitschlitzes eines TD-CDMA Systems,

FIG 2 eine Systemmatrix bzw. eine erweiterte Systemmatrix,

FIG 3 eine beispielhafte Parallelisierung einer Block-Fourier Transformation, und

FIG 4 eine Abfolge der Datenschätzung im Frequenzbereich.

Die Rückgewinnung der Daten d im Zeitbereich in zukünftigen UMTS (Universal Mobile Telecommunication System) erfordert erheblichen Rechenaufwand. Die Erfindung reduziert den Rechenaufwand merklich durch die Verwendung von vorteilhaften Algorithmen und Implementierungen.

Der Empfänger schätzt aus dem Empfangssignal möglichst gut die ursprünglich gesendeten Daten d. Die Daten d werden im Sender gespreizt und während der Übertragung verzerrt, bzw. verrauscht. Auch der Sender und der Empfänger sind mögliche Rauschquellen im System.

Um das Fern/Nah-Problem des CDMA-Verfahrens zu umgehen, schätzt der Empfänger die Daten d verwendeter Spreizkodes sk gleichzeitig. CDMA (Code Division Multiple Access) ist ein Verfahren, um Daten d mehrerer Teilnehmer auf einem gemeinsamen Medium, beispielsweise eine Funkschnittstelle, zu übertragen.

Jedes Signal wird mit einem angepaßten Kode sk im Frequenzbereich gespreizt und wird mit Kenntnis dieses Kodes sk im Empfänger wieder aus dem Signalgemisch separiert. Die anderen Signale wirken dabei wie Rauschen. Deutlich stärkere Signale können schwächere Signale merklich stören (Fern/Nah-Problem), was eine Sendeleistungsregelung erfordert.

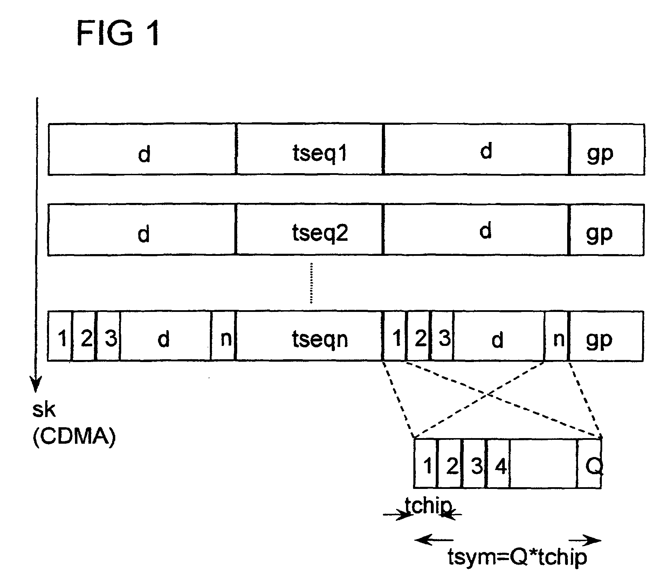

Im TD-CDMA System, wie in FIG 1 dargestellt, wird der Strom der gesendeten Daten d zeitlich in Bursts unterteilt, die durch eine Schutzzeit gp, in der nicht gesendet wird, von einander getrennt sind. Durch diese Trennung kann ein Burst am Empfänger unabhhängig von den vorher und nachher gesendeten Bursts ausgewertet werden. Durch die Unterteilung in Bursts können die Symbole mit endlichen Vektoren und Matrizen geschätzt werden. In FIG 1 ist beispielhaft ein Burst eines TD-CDMA dargestellt.

Diese Bursts bestehen aus Abschnitten mit Daten d, in denen jeweils Abschnitte mit empfangsseitig bekannten Trainingssequenzen tseql bis tseqn eingebettet sind. Die Trainingssequenzen tseql bis tseqn werden zur Kanalschätzung ausgewertet, so daß die Kanalimpulsantwort bzw. die Übertragungsfunktion des Kanals dem Empfänger bekannt sind. Die Daten d sind verbindungsindividuell mit einer Feinstruktur, einem Spreizkode sk (CDMA-Kode), gespreizt, so daß empfangsseitig beispielsweise 16 Verbindungen durch diese CDMA-Komponente separierbar sind.

Die Spreizung von einzelnen Symbolen der Daten d mit Q Chips bewirkt, daß innerhalb der Symboldauer tsym Q Subabschnitte der Dauer tchip übertragen werden. Die Q Chips bilden dabei den individuellen Spreizkode sk. Weiterhin ist innerhalb des Zeitschlitzes ts eine Schutzzeit gp zur Kompensation unterschiedlicher Signallaufzeiten der Verbindungen aufeinanderfolgender Zeitschlitze ts vorgesehen.

Zur Schätzung der Daten wird in einem ersten Schritt der Übertragungskanal modelliert. Folgend wird als Beispiel ein Funkkanal beschrieben. Für die Dauer beispielsweise eines Bursts wird der Übertragungskanal durch ein zeitkonstantes FIR Filter abgebildet. Die Spreizung der Datensymbole d ist ebenfalls beispielsweise durch ein zeitkonstantes FIR Filter darstellbar.

Unter diesen Voraussetzung kann ein Gleichungssystem aufgestellt werden.

$$\vec{x} = T - \vec{d} + \vec{n} \qquad (1)$$

Hierin sind

d: die gesendeten Datensymbole. Durch eine spezifische Anordnung wird die Lösung der Schätzung vereinfacht.

T: die Matrix, die das Übertragungssystem modelliert. Sie beschreibt sowohl die Spreizung der Daten in d, als auch die Verzerrung durch den Übertragungskanal und die Überlagerung der Datensymbole d mehrerer Teilnehmer. Zur Vereinfachung der Schätzung werden die von Null verschiedenen Elemente in T möglichst eng so um die Diagonale angeordnet, daß sie sich möglichst regelmäßig wiederholen.

n: unbekanntes Rauschen, das hauptsächlich durch die analoge Stufe des Empfängers und die Interferenzen der Nachbarzellen generiert wird, und

x: das empfangene Signal. Besteht das empfangene Signal aus Einzelempfangssignalen mehrerer Antennenelemente werden die Matrizen der Gleichung (1) entsprechend größer, so daß die Einzelempfangsignale miteinander kombiniert werden, um das Schätzergebnis zu verbessern, bzw. richtungsabhängiges Rauschen auszublenden.

In Gleichung (1) sind x und T bekannt. Aus der Kenntnis von x und T wird eine möglichst gute Schätzung der Datensymbole d abgeleitet.

Zur Schätzung der Datensymbole d wird für die herkömmliche Schätzung im Zeitbereich mit der Lösung der kleinsten Fehlerquadrate

$$\left\| \vec{x} - T \cdot \vec{d} \right\|_2^2 = \min \qquad (2)$$

mit statistischen Berechnungen die Gleichung

$$\vec{d} = (T^H T)^{-1} T^H \cdot \vec{x} \qquad (3)$$

aufgestellt. Die Lösung der Gleichung (3) erfordert sehr viele Rechenoperationen, beispielsweise in einem Signalprozessor. Der Aufwand wird bestimmt durch die Größe und innere Struktur der Matrix T.

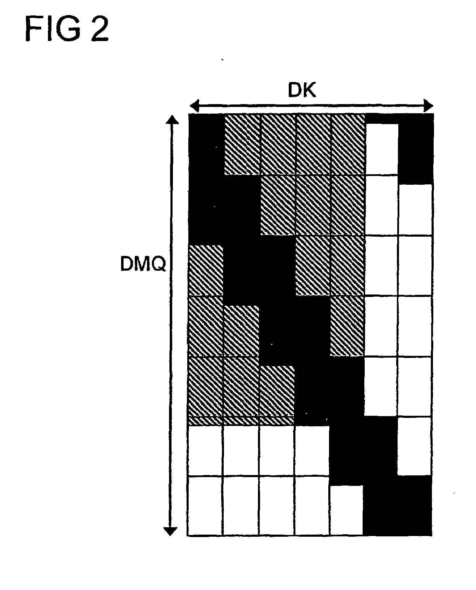

FIG 2 zeigt die Struktur der Matrix T als schraffiert dargestellte Fläche. Die in der Matrix T enthaltenen, schwarz dargestellten Flächen, sind beispielsweise von Null verschiedene Elemente der Matrix T.

Das erfindungsgemäße Verfahren ist für ein Mehrnutzersystem ausgelegt. Die Matrix T aus Gleichung (1) hat eine daher eine Block-Toeplitz Struktur und für die elementweise Division ist eine "Block-Division" vorteilhaft anzuwenden.

Ein zweiter Vorteil der Erfindung ist die Lösung der Problematik, daß der Kanal real eine lineare, d.h. nicht zyklische Faltung durchführt. Um dieses Problem zu lösen, werden, wie in FIG 2 dargestellt, an die Systemmatrix T, die eine Block-Toeplitz Struktur hat, in einem ersten Schritt Zeilen angehängt, bis die Zeilenzahl ein Vielfaches von dem Produkt MQ aus Anzahl der Spreizfaktoren sk und Anzahl der Antennen ist. Die angehängten Zeilen enthalten beispielsweise nur Nullen. Dadurch wird die Block-Struktur vervollständigt, so daß die Matrix T DMQ Zeilen hat.

In einem zweiten Schritt werden Spalten angehängt, bis die Matrix T DK Spalten hat, die der Anzahl der Teilnehmer K entsprechen. Nach dem Anhängen der Zeilen und Spalten hat die Matrix T D x D Blöcke, wobei jeder Block die Größe MQ x K hat. Sie ist damit block-quadratisch, d.h. sie hat genau so viele Block-Zeilen wie Block-Spalten. Die einzelnen Blöcke sind u.U. nicht quadratisch. Die angehängten Block-Spalten werden so gefüllt, daß jede Block-Spalte beispielsweise eine um einen Block nach unten rotierte Kopie der Block-Spalte links daneben ist. Rotiert bedeutet, daß die Elemente, die nach unten verschoben außerhalb der Matrix T liegen würden, von oben in die Matrix T wieder eingeführt werden. Die Matrix T ist dementsprechend blockzirkular.

Zur Schätzung der Daten d im Frequenzbereich werden beispielsweise die Elemente der Gleichung (1) in den Frequenzbereich transformiert. Die diskrete Fourier-Transformation (DFT) des Vektors x wird beispielsweise durch die Multiplikation mit einer Fourier-Transformations-Matrix F bestimmt:

$$DFT(x) = F \cdot \vec{x} \qquad (4)$$

Die Fourier-Transformations-Matrix F ist beispielsweise durch

$$F = (f_{kl}),\ f_{kl} = e^{-2_{rg}\frac{ki}{n}},\ j = \sqrt{-1} \qquad (5)$$

definiert. Im konkreten Anwendungsfall ist dagegen eine Block-Fourier Transformation vorteilhaft. Die Block-Fourier Transformation der Blockgröße MQ ist beispielsweise definiert durch

$$F_{(MQ)} = F \otimes I_{(MQ)} \qquad (6)$$

mit I als der Einheitsmatrix der Größe MQ.

Aus

$$\vec{x} = T \cdot \vec{d} + \vec{n} \qquad (1)$$

$$F_{(MQ)} \cdot \vec{x} = F_{(MQ)} \cdot T \cdot \vec{d} + F_{(MQ)} \cdot \vec{n} \qquad (7)$$

$$F_{(MQ)} \cdot \vec{x} = F_{(MQ)} \cdot T \cdot F_{(K)}^{-1} \cdot F_{(K)} \cdot \vec{d} + F_{(MQ)} \cdot \vec{n} \qquad (8)$$

$$F_{(MQ)} \cdot \vec{x} = \Lambda \cdot F_{(K)} \cdot \vec{d} + F_{(MQ)} \cdot \vec{n} \qquad (9)$$

ist definiert, daß die Fouriertransformierte von x gleich A mal der Fouriertransformierten von d plus der Fouriertransformierten von n ist. $F_K$ ist die Block-Fouriertransformation entsprechen der Anzahl der Teilnehmer K. A beschreibt eine elementweise Multiplikation. A ist eine Block-Diagonal-Matrix, die beispielsweise durch eine Block-Fourier Transformation bestimmt wird.

Die Block-Fourier Transformation wird beispielsweise besonders einfach aus skalaren Fouriertransformationen zusammengesetzt. Die Multiplikation wird durch L einzelne skalare schnelle Fouriertransformationen (FFT) implementiert. L ist die Anzahl der Zeilen in einem Block.

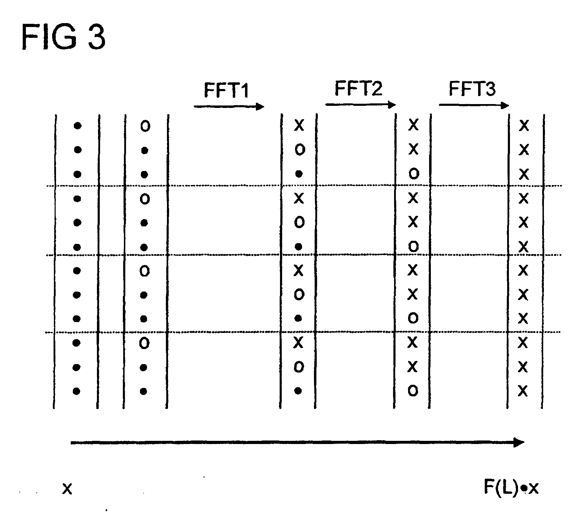

In FIG 3 wird ein Ablauf der Block-Fourier Transformation für das Beispiel L=3 und einem Vektor mit 4 Blöcken dargestellt. Dabei ist • ein Element, welches noch nicht Fourier-transformiert ist, o ein Element, welches zum selben Zeitpunkt transformiert wird, und x ist ein bereits transformiertes Element. In der Darstellung ist offenbart, daß die einzelnen schnellen Fouriertransformationen unabhängig von einander und damit beispielsweise parallel bestimmt werden. So werden besonders vorteilhaft mehrere Transformationen im Signalprozessor parallel ausgeführt.

Die Berechnung der inversen Block-Fouriertransformation erfolgt analog, indem beispielsweise die schnelle Fouriertransformation durch eine inverse schnelle Fouriertransformation ersetzt wird. Die Multiplikation wird für alle Spalten von A unabhängig und beispielsweise parallel durchgeführt. Die Spalten können in diesem Zusammenhang als Vektoren separiert werden.

Zur Schätzung der Daten im Frequenzbereich wird die Gleichung (9) beispielsweise mit der Methode der kleinsten Fehlerquadrate gelöst. Hierzu wird entweder explizit $\Lambda' \cdot \Lambda$ im Frequenzbereich berechnet, oder alternativ das Ergebnis aus $\mathbf{T'} \cdot \mathbf{T}$ im Zeitbereich in den Frequenzbereich transformiert.

$$\left\| \Lambda \cdot F_{(K)} \cdot \vec{d} - F_{(MQ)} \cdot \vec{x} \right\|_2^2 = \min \qquad (10)$$

In der Methode der kleinsten Fehlerquadrate wird die Interzell-Interferenz oder Rauschen, welches mit dem Empfangssignal korreliert ist, durch einen richtungs-, zeit- oder frequenzabhängigen Term mit einbezogen. Dieser Term wird entweder im Frequenzbereich ermittelt oder aus dem Zeitbereich in den Frequenzbereich mit einer schnellen Fouriertransformation transformiert, so daß beispielsweise zeitlich oder räumlich korrelierte Störungen der übertragenen Daten in die Methode einbezogen werden.

Die Zirkularisierung der Systemmatrix T ist eine Verfälschung des Systemmodells und würde das Ergebnis verschlechtern, wenn nicht die Modifikationen, die zur Zirkularisierung benötigt werden, in die entsprechenden Schutzzeiten gp zwischen zwei Bursts fallen und damit das Ergebnis der Schätzung nicht beeinträchtigen. Die Schätzung ist im Frequenzbereich damit von gleicher Qualität wie im Zeitbereich.

In einer Ausgestaltung der Erfindung wird die Größe der zu berechnenden Matrix T konfiguriert. Beispielsweise wird die Systemmatrix T unter Verwendung einer Überlappungsmethode (Overlap Save) verkleinert, so daß weniger Symbole d durch die Systemmatrix T abgedeckt werden. Um dennoch alle Symbole d zu schätzen, wird die Schätzung mehrmals für die verschiedenen Teile des Datenvektors bzw. bestimmte zeitliche Abschnitte des Datenstroms durchgeführt. Nicht alle Modifikationen fallen nunmehr in die Schutzzeit gp. Die durch die Zirkularisierung generierten Fehler werden daher bedeutsam und werden vorteilhaft unterdrückt.

Die durch die Modifikation generierten Fehler der Schätzung konzentrieren sich auf den Anfang und das Ende einer Folge der geschätzten Daten. Die Datensymbole d in der Mitte sind dagegen von der Modifikation nicht betroffen. Die Symbole d am Anfang und am Ende der Folge werden vorteilhaft verworfen. Beispielsweise werden für eine Folgenlänge von 32 Symbolen d am Anfang 7 und am Ende 11 Symbole verworfen. Mit der Überlappungsmethode überlappen sich die Folgen derart, daß die Datensymbole d der Mitte, die nicht von der Modifikation betroffen sind, aneinander grenzen. Die Anzahl der verworfenen Symbole d wird beispielsweise anhand der Größe der Matrix T oder der geforderten Bitfehlerrate konfiguriert.

Die Verwendung der Überlappungsmethode, insbesondere mit der Verwerfung der Symbole d am Anfang einer Folge, ist ebenfalls vorteilhaft für Schätzung im Zeitbereich anwendbar. Insbesondere die Kombination der Überlappungsmethode und der Schätzung im Frequenzbereich ermöglicht jedoch erst eine entsprechend große Reduktion des rechentechnischen Aufwandes.

Die Verwendung der Überlappungsmethode ermöglicht eine Schätzung im Frequenzbereich auch von Datenströmen ohne jegliche Schutzzeiten gp. Im W-CDMA System werden die Daten d nicht in Zeitschlitze eingeteilt, so daß folglich auch keine Schutzzeiten gp zur Kompensation der Modifikation zur Verfügung stehen. Mit der Überlappungsmethode wird der Datenstrom in Folgen unterteilt und mit der Schätzung im Frequenzbereich werden auch für ein W-CDMA System rechentechnische Ressourcen eingespart.

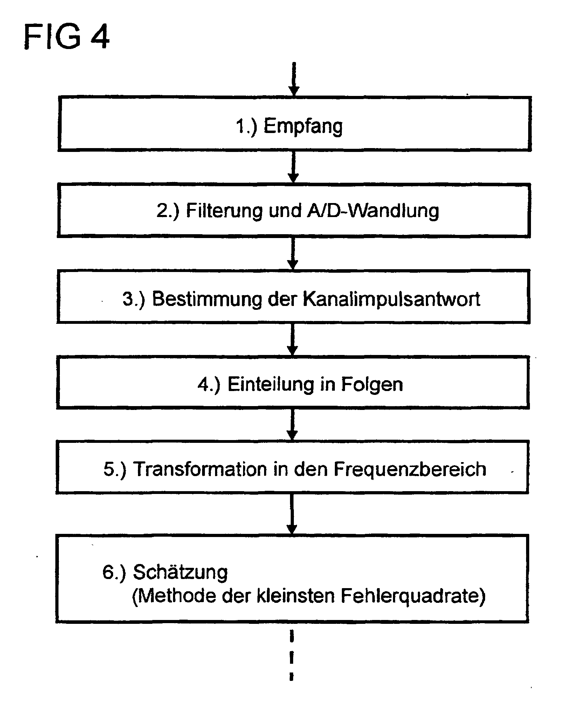

In FIG 4 ist beispielhaft eine Abfolge der Datenschätzung dargestellt. In einem ersten Schritt 1 werden die Einzelempfangssignale von mehreren Antennenelementen empfangen und in einem zweiten Schritt 2 in einer Empfangsstufe beispielsweise gefiltert und analog-digital gewandelt. In einem Signalprozessor werden aus den digitalisierten Empfangssignalen in einem dritten Schritt 3 die Kanalimpulsanworten bestimmt.

In einem vierten Schritt 4 werden die digitalisierten Empfangssignale in Folgen unterteilt. Mit den gewonnenen Empfangskenngrößen, beispielsweise der Übertragungsfunktion des Kanals, und dem Empfangssignal wird mit einer Systemmatrix T ein Gleichungssystem aufgestellt und in einem fünften Schritt 5 in den Frequenzbereich transformiert. Zur Transformation wird die Systemmatrix T ggf. angepaßt.

Die gesendeten Daten d werden im sechsten Schritt 6 beispielsweise mit der Methode der kleinsten Fehlerquadrate im Frequenzbereich geschätzt.

**Patentansprüche**

1. Verfahren zur Rückgewinnung von Daten (d) aus einem Empfangssignal, bei dem

   die gesendeten Daten (d) für unterschiedliche Verbindungen mit jeweils mindestens einem verbindungsindividuellen Spreizkode (sk) gespreizt werden,
   die gespreizten Daten (d) gemeinsam übertragen werden, und
   die Daten (d) empfangsseitig im Frequenzbereich geschätzt werden,
   bei dem Folgen von Symbolen der Daten (d) mit einer Überlappungsmethode geschätzt werden, bei dem die geschätzten Folgen von Symbolen einander überlappen.

2. Verfahren nach Anspruch 1, bei dem die Daten (d) der unterschiedlichen Verbindungen gemeinsam geschätzt werden.

3. Verfahren nach Anspruch 1 oder 2, bei dem mindestens ein Symbol am Ende einer Folge verworfen wird.

4. Verfahren nach einem der Ansprüche 1 bis 3, bei dem mindestens ein Symbol am Anfang einer Folge verworfen wird.

5. Verfahren nach einem der vorhergehenden Ansprüche, bei dem das Empfangssignal aus Einzelempfangssignalen mehrerer Antennenelemente besteht.

6. Verfahren nach einem der vorhergehenden Ansprüche, bei dem empfangsseitig Übertragungskanäle der Verbindungen im Zeitbereich modelliert werden, und die Modellierung der Übertragungskanäle und das Empfangssignal in den Frequenzbereich transformiert werden.

7. Verfahren nach Anspruch 6, bei dem die Übertragungskanäle durch eine Matrix mit einer Block-Toeplitz Struktur modelliert werden.

8. Verfahren nach Anspruch 7, bei dem zur Transformation die Matrix zu einer block-quadratischen Block-Matrix erweitert wird.

9. Verfahren nach einem der Ansprüche 6 bis 8, bei dem die Transformation durch eine Block-Fourier Transformation erfolgt .

10. Verfahren nach einem der vorhergehenden Ansprüche, bei dem
die Schätzung im Frequenzbereich durch eine elementweise Multiplikation oder Division erfolgt.

11. Verfahren nach Anspruch 10, bei dem mehrere elementweise Multiplikation oder Divisionen zeitlich parallel erfolgen.

12. Verfahren nach einem der Ansprüche 1 bis 5, bei dem
empfangsseitig Übertragungskanäle der Verbindungen im Frequenzbereich modelliert werden, und das Empfangssignal in den Frequenzbereich transformiert wird.

13. Verfahren nach einem der vorhergehenden Ansprüche, bei dem die Schätzung im Frequenzbereich durch die Methode der kleinsten Fehlerquadrate erfolgt.

14. Verfahren nach Anspruch 13, bei dem die zeitlich oder räumlich korrelierte Störungen der übertragenen Daten (d) in die Methode einbezogen werden.

## Claims

1. Method for recovery of data (d) from a received signal, in which
the transmitted data (d) for different connections is spread within each case at least one connection-specific spreading code (sk),
the spread data (d) is transmitted jointly, and the data is estimated at the receiving end in the frequency domain,
in which sequences of symbols of the data (d) are estimated using an overlapping method, in which the estimated sequences of symbols overlap one another.

2. Method according to Claim 1, in which
the data (d) on the different connections is estimated jointly.

3. Method according to Claim 1 or 2, in which
at least one symbol at the end of a sequence is rejected.

4. Method according to one of Claims 1 to 3, in which
at least one symbol at the start of a sequence is rejected.

5. Method according to one of the preceding claims, in which
the received signal comprises individual received signals from two or more antenna elements.

6. Method according to one of the preceding claims, in which
transmission channels of the connections are modelled in the time domain at the receiving end, and the modelling of the transmission channels and the received signal are transformed to the frequency domain.

7. Method according to Claim 6, in which
the transmission channels are modelled by means of a matrix with a Block-Toeplitz structure.

8. Method according to Claim 7, in which
for transformation, the matrix is extended to form a block-square block matrix.

9. Method according to one of Claims 6 to 8, in which
the transformation is carried out by means of a Block-Fourier transformation.

10. Method according to one of the preceding claims, in which
the estimation in the frequency domain is carried out by means of element-by-element multiplication or division.

11. Method according to Claim 10, in which
two or more element-by-element multiplications or divisions are carried out in parallel in time.

12. Method according to one of Claims 1 to 5, in which
transmission channels for the connections are modelled at the receiving end in the frequency domain, and
the received signal is transformed to the frequency domain.

13. Method according to one of the preceding claims, in which the estimation in the frequency domain is carried out by means of the least square errors method.

14. Method according to Claim 13, in which
the time or spatially correlated disturbances in transmitted data (d) are included in the method.

## Revendications

1. Procédé de récupération de données (d) à partir d'un signal de réception,
dans lequel
les données émises (d) sont étalées pour différentes liaisons au moyen de respectivement au moins un code d'étalement (sk) individuel à la liaison,
les données étalées (d) sont transmises en commun, et les données (d) sont estimées, côté réception, dans le domaine fréquentiel,

dans lequel des séquences de symboles des données (d) sont estimées au moyen d'une méthode de chevauchement, dans lequel les séquences de symboles estimées se chevauchent les unes sur les autres.

2. Procédé selon la revendication 1, dans lequel les données (d) des différentes liaisons sont estimées en commun.

3. Procédé selon la revendication 1 ou 2, dans lequel au moins un symbole est rejeté à la fin d'une séquence.

4. Procédé selon l'une quelconque des revendications 1 à 3, dans lequel au moins un symbole est rejeté au début d'une séquence.

5. Procédé selon l'une quelconque des revendications précédentes dans lequel le signal de réception est constitué de signaux individuels de réception de plusieurs éléments d'antenne.

6. Procédé selon l'une quelconque des revendications précédentes, dans lequel, du côté réception, des canaux de transmission des liaisons sont modelés dans le domaine temporel, et la modélisation des canaux de transmission et le signal de réception sont transformés dans le domaine fréquentiel.

7. Procédé selon la revendication 6, dans lequel les canaux de transmission sont modelés au moyen d'une matrice à structure en bloc de Toeplitz.

8. Procédé selon la revendication 7, dans lequel la matrice est élargie en une matrice en blocs à blocs carrés pour la transformation.

9. Procédé selon l'une quelconque des revendications 6 à 8, dans lequel la transformation est réalisée par une transformation de Fourier en blocs.

10. Procédé selon l'une quelconque des revendications précédentes, dans lequel l'estimation dans le domaine fréquentiel est réalisée par une multiplication ou une division élément par élément.

11. Procédé selon la revendication 10, dans lequel plusieurs multiplications ou divisions élément par élément sont réalisées parallèlement dans le temps.

12. Procédé selon l'une quelconque des revendications 1 à 5, dans lequel, les canaux de transmission des liaisons sont modelés dans le domaine fréquentiel, du côté réception, et le signal de réception est transformé dans le domaine fréquentiel.

13. Procédé selon l'une quelconque des revendications précédentes, dans lequel l'estimation dans le domaine fréquentiel est réalisée par la méthode des moindres carrés d'erreurs.

14. Procédé selon la revendication 13, dans lequel les défauts, corrélés dans le temps ou dans l'espace, des données transmises (d) sont insérés dans la méthode.

# FIG 1

| d | tseq1 | d | gp |
|---|---|---|---|

| d | tseq2 | d | gp |
|---|---|---|---|

| 1 | 2 | 3 | d | n | tseqn | 1 | 2 | 3 | d | n | gp |
|---|---|---|---|---|---|---|---|---|---|---|---|

sk
(CDMA)

| 1 | 2 | 3 | 4 | | Q |
|---|---|---|---|---|---|

tchip

$tsym=Q*tchip$

FIG 2

# FIG 3

# FIG 4

```
                    │
                    ▼
┌───────────────────────────────────────────┐
│              1.) Empfang                    │
└───────────────────────────────────────────┘
                    │
                    ▼
┌───────────────────────────────────────────┐
│       2.) Filterung und A/D-Wandlung        │
└───────────────────────────────────────────┘
                    │
                    ▼
┌───────────────────────────────────────────┐
│    3.) Bestimmung der Kanalimpulsantwort    │
└───────────────────────────────────────────┘
                    │
                    ▼
┌───────────────────────────────────────────┐
│           4.) Einteilung in Folgen          │
└───────────────────────────────────────────┘
                    │
                    ▼
┌───────────────────────────────────────────┐
│   5.) Transformation in den Frequenzbereich │
└───────────────────────────────────────────┘
                    │
                    ▼
┌───────────────────────────────────────────┐
│   6.) Schätzung                             │
│       (Methode der kleinsten Fehlerquadrate)│
└───────────────────────────────────────────┘
                    ┊
```